# EUROPEAN PATENT APPLICATION

(11) **EP 0 942 032 A1**
(43) Date of publication of application: **15.09.1999**
(21) Application number: 99301694.8
(22) Date of filing: 05.03.1999
(51) Int. Cl.: C08J 9/08, C08L 13/02, C08J 5/12

(54) **Aqueous adhesive**

(30) Priority: 09.03.1998 US 37255
(71) Applicant: LORD CORPORATION, Cary, NC 27512-8012 (US)
(72) Inventor: Tallmadge, Jack N., Fairview, PA 16415 (US); Mowrey, Douglas H., Pleasantville, PA 16341 (US)
(74) Representative: Eastwood, Simon Christopher

(57) **Abstract**

An aqueous curable adhesive comprising a styrene copolymer, an alkyl thiuram sulfide, a metal oxide, water, and an aromatic nitroso compound or aromatic nitroso compound precursor. Preferably, there is at least 35 weight percent styrene copolymer and at least 1 weight percent alkyl thiuram sulfide, based on the total dry weight of the adhesive composition. This adhesive is particularly useful for bonding a metallic substrate to an elastomeric substrate made from a brominated polymer of isobutylene and paramethylstyrene.

## Description

### Background of the Invention

The present invention relates to an aqueous adhesive that includes styrene copolymer and is useful for bonding to polymeric substrates, particularly substrates made from a terpolymer of isobutylene, para-methylstyrene and bromo-para-methylstyrene.

Articles of manufacture that include an elastomeric portion made from fully ethylenically saturated heteropolymers that are derived from at least isobutylene and paramethyl styrene monomers are becoming more common. These articles often include a metallic portion that is adhesively bonded to the elastomeric portion. Isobutylene/paramethyl styrene heteropolymers are particularly difficult to bond due to their full ethylenical saturation. Prior to the present invention, there was no aqueous adhesive that adequately bonded to isobutylene/para-methylstyrene heteropolymers, particularly brominated isobutylene/para-methylstyrene heteropolymers.

The need for environmentally-friendly waterborne adhesives that avoid the use of volatile organic solvents (VOC) is well-known. Various aqueous adhesives for bonding elastomeric materials to metallic materials have been developed in a continuing effort to obtain the same or better level of performance compared with organic solvent-borne adhesives. For example, U.S. Patents No. 5,496,886; 5,496,884; 5,367,010; 5,354,805; 5,300,555; 5,281,638; 5,268,404; 5,200,459; 5,200,455; 5,036,122 and 4,167,500 all describe aqueous elastomer-to-metal adhesives and/or primers. An aqueous primer that includes a carboxylated styrene/butadiene rubber latex is commercially available from Lord Corporation.

Adhesives that include styrene copolymers are also known. For example, U.S. Patent No 5,395,879 relates to an organic solvent-free adhesive composition that includes 40-60 wt.% water, 35-50 wt.% elastomer, 0.02-0.60 wt.% of a potassium hydroxide or aqueous ammonia pH adjuster, 0.10-1.8 wt.% of a sodium lignosulfate, octylphenoxypolyethoxyethanol, polyoxyethylene sorbitol fatty acid ester or sulfated fatty acid surfactant/stabilizer, 0.5-5.0 wt.% carbon black of series N-300 or N-200, up to 0.75 wt.% zinc oxide and up to 0.20 wt.% of a tetraethyl thiuram disulfide, tetramethyl thiuram disulfide or tetramethyl thiuram monosulfide accelerator, wherein the weight percent are based on the total weight of the composition. U. S. Patent No. 5,652,298 (which is a divisional of U.S. Patent No. 5,395,879) relates to an adhesive that includes the same components as the adhesive of the '879 patent except that there is 25.0-50.0 wt.% elastomer and 0.51-10.0 wt.% carbon black. The adhesive is said to be useful for bonding a rubber substrate to a rubber substrate. JP-A-05140516 (according to a Derwent abstract) relates to a pressure sensitive adhesive that includes a base polymer consisting of 45-95 wt.% natural rubber, 0-25 w.% styrene-butadiene copolymer rubber and 5-30 wt.% isobutylene rubber, 0-100 parts by weight zinc oxide, 20-140 parts by weight tackifier resin, 0.5-7 parts by weight thiuram compound and 0.05-10 parts by weight of a dithiocarbamate, xanthate or thiazole compound. JP-A-06087978 (according to a Derwent abstract) relates to a pressure sensitive similar to that disclosed in JP-A-05140516 except that the base polymer consists of 40-97 wt.% natural rubber, 3-60 wt.% styrene-butadiene copolymer rubber and 0-32 wt.% polyisobutylene. GB-A-2305667 (according to a Derwent abstract) relates to an adhesive that includes 50-98 wt.% bitumen, 2-20 wt.% styrene-butadiene block copolymer,0-10 wt.% tackifying agent, 0-0.1 wt.% sulfur, 0-0.1 wt.% stearic acid, 0-0.1 wt.% zinc oxide and 0-0.05 wt.% tetramethyl thiuram disulfide accelerator.

U.S. Patent No. 5,084,514 relates to a latex for making gloves that includes a carboxylated butadiene/acrylonitrile/(meth)acrylate terpolymer and, optionally, up to 25% by weight carboxylated butadiene styrene, 0.01 to 2 dry parts (per 100 dry parts latex) of tetramethylthiuram disulfide or polysulfide thiuram, and 0.01 to 7 dry parts (per 100 dry parts) of zinc oxide.

### Summary of the Invention

According to a first embodiment of the present invention, there is provided an aqueous curable adhesive comprising at least 35 weight percent of a styrene copolymer, at least 1 weight percent of an alkyl thiuram sulfide, a metal oxide and water, wherein the weight percents are based on the total dry weight of the adhesive composition. According to a second embodiment of the present invention there is provided an aqueous curable adhesive comprising a styrene copolymer, an alkyl thiuram sulfide, a metal oxide, water and an aromatic nitroso compound or aromatic nitroso compound precursor. There is also provided a process that uses this aqueous adhesive for bonding a metallic or fibrous substrate to an elastomeric substrate, particularly an elastomeric substrate made from a brominated polymer of isobutylene and para-methylstyrene, and the resulting bonded metal/elastomer or fiber/elastomer article.

### Detailed Description of the Preferred Embodiments

Unless otherwise indicated, description of components in chemical nomenclature refers to the components at the time of addition to any combination specified in the description, but does not necessarily preclude chemical interactions among the components of a mixture once mixed.

The present invention is particularly useful as a liquid curable or vulcanizable adhesive. The adhesive typically is applied in a relatively free-flowing liquid form as opposed to a tacky material that is able to freely maintain a shape such as a pressure sensitive adhesive. It is a curable adhesive in the sense that cure is initiated by subjecting the adhesive to heat.

As used herein, "styrene copolymer" means a copolymer, terpolymer or higher heteropolymer wherein at least one of the co-monomers is styrene or a derivative thereof such as α-methyl styrene, 2-methyl styrene, 3-methyl styrene, 4-methyl styrene, 2,4-diisopropylstyrene, 2,4-dimethyl styrene, tert-butyl styrene and the like. Useful monomers copolymerizable with the styrene monomer typically include ethylenically unsaturated functionality. Examples of copolymerizable monomers include conjugated diene such as 1,3-butadiene, 2-methyl-1,3-butadiene, 2-ethyl-1,3-butadiene, 2,3-dimethyl-1,3-butadiene and the like; acrylonitrile; methacrylonitrile; acrylate; and methacrylate. Illustrative styrene copolymers include styrene-butadiene rubber, styrene acrylate and styrene acrylonitrile. The weight ratio of styrene to butadiene preferably is 20:80 to 80:20, preferably 35:65 to 65:35.

The styrene copolymer preferably is carboxylated. As used herein, carboxylated means that the styrene copolymer includes pendant carboxyl functionalities. Monomers that may be polymerized into the styrene copolymer to provide the carboxyl functionality may include ethylenically unsaturated carboxylic acids such as acrylic acid, methacrylic acid, crotonic acid, cinnamic acid, itaconic acid, fumaric acid, maleic acid and butene tricarboxylic acid. The carboxyl monomer preferably is provided in an amount of 0.1 to 25 wt%, more preferably 0.5 to 12 wt%, most preferably I to 7 wt%, based on the total amount of monomers used to make the carboxylated styrene copolymer.

Lattices, emulsions or dispersions of carboxylated styrene copolymers are well-known. Carboxylated styrene-butadiene rubber is particularly preferred. Carboxylated styrene-butadiene rubber latex is commercially available, for example, from Mallard Creek under the trade designation ROVENE 4150 and ROVENE 4170 and from Reichold Chemical Company under the trade designation TYLAC 68219. A carboxylated terpolymer latex of butadiene, styrene and acrylonitrile is commercially available from B.F. Goodrich under the tradename HYCAR 1578X1.

The carboxylated styrene copolymer acts as a film-former and typically is formulated or added into the adhesive as an emulsion, dispersion or latex. The carboxylated styrene copolymer preferably is present in an amount of 35 to 70, preferably 45 to 65, weight percent, based on the total dry (i.e., without water) weight of the adhesive composition.

Illustrative alkyl thiuram sulfides include dipentamethylene thiuram tetrasulfide, dipentamethylene thiuram hexasulfide, tetraethyl thiuram disulfide, tetramethyl thiuram disulfide, tetramethyl thiuram monosulfide, tetrabutyl thiuram disulfide and mixtures thereof. Higher sulfides such as tetrasulfide or hexasulfide are preferred. Dipentamethylene thiuram tetrasulfide and/or dipentamethylene thiuram hexasulfide commercially available from R.T. Vanderbilt Co. under the trade designation SULFADS or from DuPont under the trade designation TETRONE A is especially preferred. The alkyl thiuram sulfide is formulated into the adhesive composition in finely divided form or as a dispersion in an aqueous carrier. The alkyl thiuram sulfide preferably is present in an amount of at least 1, preferably 2, weight percent, especially 1 to 7, preferably 2 to 4, weight percent, based on the total dry (i.e., without water) weight of the adhesive composition.

Illustrative metal oxides include zinc oxide, zirconium oxide, lead oxide, magnesium oxide, iron oxide, cadmium oxide and calcium oxide, with zinc oxide being preferred. The metal oxides are well-known articles of commerce. The metal oxide is formulated into the adhesive composition in finely divided form or as a dispersion in an aqueous carrier. The metal oxide preferably is present in an amount of 5 to 40, preferably 10 to 30, weight percent, based on the total dry (i.e., without water) weight of the adhesive composition.

Water, preferably deionized water, is utilized in combination with the primary components and any optional components of the invention in order to provide an adhesive composition having the desired finals solid content.

A preferred component is an aromatic nitroso compound or aromatic nitroso compound precursor. The aromatic nitroso compound can be any aromatic hydrocarbon, such as benzenes, naphthalenes, anthracenes, biphenyls, and the like, containing at least two nitroso groups attached directly to non-adjacent ring carbon atoms. Such aromatic nitroso compounds are described, for example, in U.S. Patent No. 3,258,388; U.S. Patent No. 4,119,587 and U.S. Patent No. 5,496,884. The aromatic nitroso compound or aromatic nitroso compound precursor, if present, is preferably in an amount of 1 to 30, more preferably, 5 to 20, weight percent, based on the total dry weight of the adhesive. An aromatic nitroso compound precursor is preferred.

More particularly, such nitroso compounds are described as aromatic compounds having from 1 to 3 aromatic nuclei, including fused aromatic nuclei, having from 2 to 6 nitroso groups attached directly to non-adjacent nuclear carbon atoms. The preferred nitroso compounds are the dinitroso aromatic compounds, especially the dinitrosobenzenes and dinitrosonaphthalenes, such as the meta- or para-dinitrosobenzenes and the meta- or para-dinitrosonaphthalenes. The nuclear hydrogen atoms of the aromatic nucleus can be replaced by alkyl, alkoxy, cycloalkyl, aryl, aralkyl, alkaryl, arylamine, arylnitroso, amino, halogen and similar groups. Thus, where reference is made herein to "aromatic nitroso compound" it will be understood to include both substituted and unsubstituted nitroso compounds.

Particularly preferred nitroso compounds are characterized by the formula:

(R)ₘ-Ar-(NO)₂

wherein Ar is selected from the group consisting of phenylene and naphthalene; R is a monovalent organic radical selected from the group consisting of alkyl, cycloalkyl, aryl, aralkyl, alkaryl, arylamine and alkoxy radicals having from 1 to 20 carbon atoms, amino, or halogen, and is preferably an alkyl group having from I to 8 carbon atoms; and m is 0, 1, 2, 3, or 4, and preferably is 0.

Exemplary suitable aromatic nitroso compounds include m-dinitrosobenzene, p-dinitrosobenzene, m-dinitrosonaphthalene, p-dinitrosonaphthalene, 2,5-dinitroso-p-cymene, 2-methyl-1,4-dinitrosobenzene, 2-methyl-5-chloro-1,4-dinitrosobenzene, 2-fluoro-1,4- dinitrosobenzene, 2-methoxy-1-3-dinitrosobenzene, 5-chloro-1,3-dinitrosobenzene, 2-benzyl-1,4-dinitrosobenzene, 2-cyclohexyl-1,4-dinitrosobenzene and combinations thereof. Particularly preferred are m-dinitrosobenzene and p-dinitrosobenzene.

The aromatic nitroso compound precursor may be essentially any compound that is capable of being converted, typically by oxidation, to a nitroso compound at elevated temperatures, typically from about 140-200°C. This conversion usually occurs during the bonding procedure used with the adhesive. The most common aromatic nitroso compound precursors are quinone compounds. Examples of such quinone compounds include quinone dioxime, dibenzoquinone dioxime, 1,2,4,5-tetrachlorobenzoquinone, 2-methyl-1,4-benzoquinone dioxime, 1,4-naphthoquinone dioxime, 1,2-naphthoquinone dioxime and 2,6-naphthoquinone dioxime. Quinone dioxime is especially preferred. An optional component is a citraconimide or itaconimide. The preferred citraconimide is 1,3-bis(citraconimidomethyl) benzene (also known as N,N'-m-xylylene bis-citraconic imide commercially available from Flexsys America LP or Akzo Nobel under the trade designation PERKALINK 900). The citraconimide or itaconimide, if present, preferably is in the amount of 1 to 15, more preferably 2 to 7, weight percent, based on the total dry weight of the adhesive.

The composition can also optionally include other additives such as lead-containing compounds (for example, polybasic lead salts of phosphorous acid and saturated and unsaturated organic dicarboxylic acids and anhydrides), plasticizers, fillers, pigments, surfactants, dispersing agents, wetting agents, reinforcing agents and the like, in amounts employed by those skilled in the adhesive arts. Examples of optional ingredients include carbon black, silica such as fumed silica, sodium aluminosilicate and titanium dioxide.

The compositions may be prepared by any method known in the art, but are preferably prepared by combining and milling or shaking the ingredients and water in a ball-mill, sand-mill, ceramic bead-mill, steel bead-mill, high speed media-mill or the like. It is preferred to add each ingredient to the mixture in a liquid form such as an aqueous dispersion.

The adhesive may be applied to a substrate for bonding by spraying, dipping, brushing, wiping, roll-coating (including reverse roll-coating) or the like, after which the adhesive is permitted to dry. The composition typically is applied in an amount sufficient to form a dry film thickness generally ranging from 0.5 to 1.5, preferably 0.8 to 1.0, µm. The adhesive of the invention might be used as a one-coat adhesive (in other words, it can be used by itself without a primer). Preferably it is used as a covercoat over a primer. Suitable bonding primers include CHEMLOK® 805, CHEMLOK® ' 8007 and CHEMLOK® 8003 - all commercially available from Lord Corporation - and other primers described in U.S. Patents No. 5,200,455 and 5,162,156.

The adhesive composition can be used to bond any type of elastomeric materials to metallic or fibrous materials. As explained below in more detail, the elastomeric material typically is in its pre-vulcanized or pre-cured state prior to bonding (in other words, it is vulcanizable or curable). The elastomeric material can be selected from any of the natural rubbers and olefinic synthetic rubbers including polychloroprene, polybutadiene, neoprene, styrene-butadiene copolymer rubber, acrylonitrile-butadiene copolymer rubber, ethylene-propylene copolymer rubber (EPM), ethylene-propylenediene terpolymer rubber (EPDM), butyl rubber, brominated butyl rubber, alkylated chlorosulfonated polyethylene and the like. The material may also be a thermoplastic elastomer such as those sold under the trade designations SANTOPRENE and ALCRYN by Monsanto and Dupont, respectively.

However, the adhesive composition of the present invention is particularly effective for bonding fully saturated heteropolymers or interpolymers made from at least C₄ to C₇ isoolefin, such as isobutylene, and para-alkylstyrene. Halogenated versions of these heteropolymers are finding increasing commercial use. Preferably, the para-alkylstyrene contains at least 80% by weight of the para isomer and at least some of the alkyl substituents groups present in the styrene monomer units contain halogen. One particularly useful halogenated polymer is brominated polymer of isobutylene and para-alkylstyrene (also referred to as a terpolymer of isobutylene, bromo-para-methylstyrene and para-methylstyrene). Most useful of such materials are elastomeric interpolymers of isobutylene and para-methylstyrene containing from 0.5 to 20 mole % p-methylstyrene wherein up to 60 mole % of the methyl substituent groups present on the benzyl ring contain a bromine or chlorine atom, preferably a bromine atom. These materials are commercially available from Exxon Chemical Co. under the trade designation XP-50, BROMO XP-50 or EXXPRO and are described in U.S. Patents No. 5,656,694; 5,373,062; and 5,162,445, all incorporated herein by reference.

The metallic material may be selected from any of the common structural metals such as iron, steel (including stainless steel and electrogalvanized steel), lead, aluminum, copper, brass, bronze, MONEL metal alloy, nickel, zinc and the like. Prior to bonding the metal surface is typically cleaned according to one or more methods known in the art such as degreasing, grit-blasting and zinc-phosphatizing.

The fibrous material usually is a textile substrate such as a fabric or multifilament cord made from, for example, polyester, polyamide (both nylon and aramid), polyethylene, polypropylene, glass, carbon, rayon or cotton fibers. A layer of fibrous material can be bonded to outer elastomeric layers to form a composite multilayer structure. Exemplary articles that can be formed from such composites includes belts, hoses and air springs.

The adhesive composition typically is applied to the metal or fibrous surface. The coated metal or fibrous surface and the elastomeric surface are then contacted under heat and pressure to complete the bonding procedure. As mentioned above, a primer usually is applied to the metal surface prior to application of the adhesive composition. The exact bonding conditions selected will depend upon the particular elastomer being bonded and whether or not the elastomer is cured prior to bonding. In some cases, it may be desirable to preheat the metal surface prior to application of the adhesive composition to assist in drying of the adhesive. The coated surface of the metal and the elastomeric substrate are typically brought together under a pressure of from 20 to 175 MPa, preferably from 20 to 50 MPa. If the elastomer is uncured, the resulting elastomer-metal assembly is simultaneously heated to a temperature from 150° to 200°C, preferably from 170° to 185°C. The assembly should remain under the applied pressure and temperature for a period of 3 to 60 minutes, depending upon the cure rate and thickness of the elastomeric substrate.

The bonding process may be carried out by applying the elastomeric substrate as a semi-molten material to the metal surface as in, for example, an injection-molding process. The process may also be carried out by utilizing compression molding, transfer molding or autoclave curing techniques. After the process is complete the bond is fully vulcanized and ready for use in a final application.

The invention will be described in more detail by way of the following nonlimiting examples.

### Example 1

The following ingredients (in dry weight%) were mixed together and water was added to produce an adhesive covercoat composition having approximately 40 to 50% solids:

| | |
|---|---|
| Carboxylated SBR¹ | 55.25 |
| Quinone dioxime | 15 |
| Zinc oxide | 20 |
| Carbon black² | 5 |
| Dipentamethylene thiuram tetrasulfide³ | 3 |
| Dispersing agent⁴ | 0.75 |
| Wetting agent⁵ | 1 |

| | |
|---|---|
| ¹TYLAC 68219 available from Reichhold Chemical | |
| ²RAVEN 14 available from Columbian Chemicals Co. | |
| ³SULFADS available from R.T. Vanderbilt Co. | |
| ⁴MARASPERSE CBOS available from American Can Co. | |
| ⁵POLYWET available from Uniroyal. | |

An aqueous primer (CHEMLOK® 8007) was sprayed to a thickness of 0.3 mils onto warm (50-80°C) grit-lasted steel coupons. The covercoat composition described above is sprayed onto the primer-coated coupons to a total thickness of 1.3 mils. EXXPRO rubber stock (stock B has a 30-35 shore A durometer and stock A has a 45-50 shore A durometer) was compression molded onto the adhesive-covered coupons at 320°F and 360°F for time periods ranging from 15 to 31 minutes.

### Example 2

An adhesive covercoat composition was prepared according to Example 1 except that there was 5 wt% quinone dioxime, 10 wt% carbon black and 60.25 wt% carboxylated SBR. The test assemblies with this covercoat were prepared in the same manner as in Example 1.

### Example 3

An adhesive covercoat composition was prepared according to Example I except that there was 17 wt% zinc oxide and 3 wt% 1,3-bis(citraconimidomethyl) benzene (PERKALINK 900). The test assemblies with this covercoat were prepared in the same manner as in Example 1.

The resulting test assemblies were subjected to adhesive bonding tests as described below. Table 1 shows the results. The results for primary adhesion for Example I are the average of 10 different runs.

Primary adhesion of the bonded assemblies at room temperature was tested according to ASTM-D 429 Method B. The rubber is pulled so as to peel it away at an angle of 90 degrees from the metal coupon at 2 inches per minute. The maximum force required to remove the rubber is expressed as a peak peel strength measured in pounds per linear inch. The failure mechanism for the tested bond is expressed in terms of percent. A high percent of rubber retained (R) on the metal coupon is desirable since this indicates that the adhesive bond is stronger than the rubber itself. Rubber-cement failure (RC) indicates the percentage of failure at the interface between the rubber and the adhesive. Cement-metal failure (CM) indicates the percentage of failure at the interface between the metal substrate and the adhesive.

For the heat resistance test the bonded test assemblies were prepared according to ASTM-D 429 B. The leading edge of each of the assemblies was stressed by suspending a two kg weight on the overlapping rubber tail and the assembly was then mounted on a fixture so that the rubber tail was at an approximately 90° angle to the plane formed by the bonded interface. The assembly then was placed in an oven at 168°F for seven days. After this aging, the assembly is cooled to room temperature and the rubber is pulled so as to peel it away at an angle of 90 degrees from the metal coupon at 2 inches per minute. The maximum force required to remove the rubber is expressed as a peak peel strength measured in pounds per linear inch. The failure mechanism for the tested bond is expressed in terms of percent as described above.

For the salt spray test the bonded test assemblies were prepared according to ASTM-D 429 B. The leading edge of each of the assemblies was stressed by suspending a two kg weight on the overlapping rubber tail and the assembly was then mounted on a fixture so that the rubber tail was at an approximately 90° angle to the plane formed by the bonded interface. The assembly then was placed in a salt spray chamber. The environment inside the chamber is 100°F, 100 percent relative humidity and 5 percent dissolved salt in the spray, which is dispersed throughout the chamber. The assemblies remain in the chamber for seven days. Upon removal, the rubber is peeled manually from the metal substrate. The amount of rubber retained on the bonded area is recorded as a percentage as described above.

**Table 1**

| Ex | Test | Stock A - 320°F | Stock A - 360°F | Stock B - 320°F | Stock B - 360°F |
|---|---|---|---|---|---|
| 1 | Primary | 55.8 lb, 74.6 R | 70.3 lb, 88.7 R | 42.0 lb, 73.3 R | 46.2 lb, 92.8 R |
| 1 | Heat resistance | 100 lb, 100 R | 90 lb, 100 R | rubber break, 100 R | rubber break, 100 R |
| 1 | Salt spray | 0 lb, 0 R | 0 lb, 0 R | rubber break, 100 R | rubber break, 100 R |
| 2 | Primary | 83 lb, 100 R | 72 lb, 65 R | 38 lb, 78 R | 49 lb, 81 R |
| 2 | Salt spray | 51 R | 14 R | Not tested | Not tested |
| 3 | Primary | 79 lb, 86 R | 79 lb, 97 R | 46 lb, 75 R | 47 lb, 100 R |
| 3 | Salt spray | 15 R | 49 R | Not tested | Not tested |

Table 1 shows that all of the examples provide superior bonding, particularly at higher curing temperatures. Example 2 (includes a lower amount of quinone dioxime) and Example 3 (includes PERKALINK 900) exhibit improved bonding under the salt spray resistance testing.

## Claims

1. An aqueous curable adhesive comprising:
(a) at least 35 weight percent styrene copolymer;
(b) at least 1 weight percent alkyl thiuram sulfide;
(c) metal oxide; and
(d) water,
wherein the weight percent is based on the total dry weight of the adhesive composition.

2. An aqueous adhesive according to claim 1 wherein the styrene copolymer comprises a carboxylated styrene-butadiene rubber latex.

3. An aqueous adhesive according to claim 1 or 2 wherein the alkyl thiuram sulfide is selected from at least one of dipentamethylene thiuram tetrasulfide and dipentamethylene thiuram hexasulfide.

4. An aqueous adhesive according to any one of the preceding claims further comprising a component (e) selected from the group consisting of citraconimide and itaconimide.

5. An aqueous adhesive according to any one of the preceding claims further comprising a component (f) selected from the group consisting of an aromatic nitroso compound and an aromatic nitroso compound precursor.

6. An aqueous curable adhesive comprising:
(a) styrene copolymer;
(b) alkyl thiuram sulfide;
(c) metal oxide
(d) at least one aromatic nitroso compound or aromatic nitroso compound precursor; and
(e) water.

7. An aqueous adhesive according to claim 6 wherein the styrene copolymer comprises a carboxylated styrene-butadiene rubber latex.

8. An aqueous adhesive according to claim 6 or 7 wherein the alkyl thiuram sulfide is selected from at least one of dipentamethylene thiuram tetrasulfide and dipentamethylene thiuram hexasulfide.

9. A process for bonding a metallic or fibrous surface to an elastomeric surface comprising applying to the metallic or fibrous surface an aqueous curable adhesive according to claim 1 or 6, contacting the elastomeric surface to the adhesive-coated metallic or fabric surface, and curing the adhesive.

10. A process according to claim 9 wherein the elastomeric surface is made from a heteropolymer of at least a C₄ to C₇ isoolefin and a para-alkylstyrene.
